# EUROPÄISCHE PATENTANMELDUNG

(11) **EP 3 176 397 A1**
(43) Veröffentlichungstag der Anmeldung: **07.06.2017**
(21) Anmeldenummer: 15198052.1
(22) Anmeldetag: 04.12.2015
(51) Int. Cl.: F01N 3/20, F01N 3/05, F02B 37/16, F02D 41/02, F02B 37/10, F02D 41/00, F02B 29/04

(54) **VERBRENNUNGSMOTOR UND VERFAHREN ZUM OPTIMIEREN DER ABGASNACHBEHANDLUNG EINES VERBRENNUNGSMOTORS**

(71) Anmelder: Winterthur Gas & Diesel Ltd., 8401 Winterthur (CH)
(72) Erfinder: Brunner, Matthias, 8400 Winterthur (CH); Brutsche, Martin, 8400 Winterthur (CH); Kadau, Dirk, 8046 Zürich (CH)
(74) Vertreter: Hepp Wenger Ryffel AG

(57) **Zusammenfassung**

Verbrennungsmotor (1), insbesondere 2-Takt Schiffsmotor, bevorzugt Kreuzkopfverbrennungsmotor, der zumindest einen, bevorzugt eine Vielzahl von Zylindern umfasst, die mit einem Abgasreceiver (2) verbunden sind. Der Verbrennungsmotor (1) umfasst einen SCR Reaktor (3), dessen Eingang (3a) mit einem Ausgang (2b) des Abgasreceivers (2) verbunden ist und einen Turbolader (4) mit einer Turbine (5) und einem Kompressor (6). Der Turbineneingang (5a) ist mit einem Ausgang (3b) des SCR Reaktors (3) über einen Turbinenpfad (7) verbunden, wobei die Turbine (5) des Turboladers (4) den Kompressor (6) antreibt und dessen Kompressorausgang (6b) über einen Ladeluftpfad (8) mit einem Ladeluftreceiver (9) verbunden ist. Der Ladeluftreceiver (9) ist mit einem Lufteinlass (10) der Zylinder des Verbrennungsmotors (1) verbunden und der Ladeluftpfad (8) umfasst einen Ladeluftkühler (11). Stromaufwärts des Ladeluftkühlers (11) ist eine Umgehungsleitung (12) angeordnet, die den Ladeluftpfad (8) mit dem Turbinenpfad (7) verbindet.

## Beschreibung

Die vorliegende Erfindung richtet sich auf einen Verbrennungsmotor sowie ein Verfahren zum Optimieren der Abgasnachbehandlung eines Verbrennungsmotors gemäss dem Oberbegriff der unabhängigen Ansprüche.

Die Verwendung von selektiven katalytischen Reduktionsreaktoren (nachfolgend SCR Reaktor) zur Durchführung der selektiven katalytischen Reduktion (SCR) bei Verbrennungsmotoren ist bekannt. Des Weiteren ist die Problematik der zu tiefen Abgastemperaturen bekannt, bei denen die selektive katalytische Reduktion nicht ausreichend funktioniert.

Derartige zu niedrige Abgastemperaturen treten insbesondere bei niedrigen Motorleistungen, beispielsweise weniger als 40 Prozent der maximalen Dauerleistung, auf.

Insbesondere bei Schiffsmotoren von grossen Schiffen wurden die Emissionsanforderungen immer weiter erhöht, insbesondere in Bezug auf NO_{X} Ausstoss. Ein zuverlässiges Funktionieren der selektiven katalytischen Reduktion auch bei niedrigen Motorlasten ist daher zwingend notwendig.

Aus der DK 177 631 ist eine Lösung dieses Problems bekannt, bei der ein Bypass von einer Position nach einem Hilfsgebläse oder vom Ladeluftreceiver direkt zu einer Position in einer Leitung zwischen dem SCR-Katalysator und dem Turbineneinlass führt. Durch diese Massnahme wird die Abgastemperatur für Abgase, die in den SCR eintreten, erhöht. Nachteilig bei dieser Variante ist, dass durch die direkte Verbindung von Ladeluftreceiver und Turbine Druck und Temperatur der Ladeluft gleichzeitig für den Motor und für den Betrieb des SCR-Katalysators optimiert werden müssen. Zusätzlich führt die Rückführung von vergleichsweise kalter Luft zu instabilen Turboladerdrehzahlen. Des Weiteren ist insbesondere bei niedrigen Motorleistungen der Einsatz eines Hilfsgebläses vor dem Ladeluftreceiver zum Betrieb des Motors aufgrund der zu geringen Turboladerleistung notwendig. Die Abnahme von Luft stromabwärts des Hilfsgebläses führt daher gerade bei niedrigen Lasten zur Abnahme von Luft von einem hohen Druckniveau, also hoher Energie, und Führen dieser energiereichen Luft zurück auf die Turbine. Dadurch wird der Turboladerwirkungsgrad erhöht, was wiederum zu höherem Druck nach dem Turbolader und dadurch einem besseren Verbrennungswirkungsgrad führt. Dieser bessere Verbrennungswirkungsgrad führt zu einer niedrigeren Abgastemperatur, was gerade nicht gewünscht ist.

Es ist daher Aufgabe der vorliegenden Erfindung die Nachteile des Standes der Technik zu vermeiden und einen Verbrennungsmotor zu schaffen, der optimal auf die notwendige Temperatur des Abgases für die selektive katalytische Reduktion und gleichzeitig optimal für den gewünschten Verbrennungsprozess des Motors eingestellt werden kann.

Die Aufgabe wird durch einen Verbrennungsmotor sowie ein Verfahren zum Optimieren der Abgasnachbehandlung gemäss dem kennzeichnenden Teil der unabhängigen Ansprüche gelöst.

Insbesondere wird die Aufgabe durch einen Verbrennungsmotor, insbesondere Zwei-Takt Schiffsmotor, bevorzugt Kreuzkopfverbrennungsmotor, gelöst, der zumindest einen, bevorzugt eine Vielzahl von Zylindern umfasst, die mit einem Abgasreceiver verbunden sind. Der Verbrennungsmotor umfasst weiterhin einen SCR Reaktor, dessen Eingang mit einem Ausgang des Abgasreceivers verbunden ist. Weiterhin umfasst der Verbrennungsmotor einen Turbolader mit einer Turbine und einem Kompressor, wobei der Turbineneingang mit einem Ausgang des SCR Reaktors über einen Turbinenpfad verbunden ist. Die Turbine des Turboladers treibt den Kompressor an und der Kompressorausgang des Turboladers ist über einen Ladeluftpfad mit einem Ladeluftreceiver verbunden. Der Ladeluftreceiver ist mit einem Lufteinlass der Zylinder des Verbrennungsmotors verbunden und der Ladeluftpfad umfasst einen Ladeluftkühler. Stromaufwärts des Ladeluftkühlers ist eine Umgehungsleitung angeordnet, die den Ladeluftpfad mit dem Turbinenpfad verbindet.

Durch die Abnahme und Rückführung von warmer, komprimierter Luft direkt nach dem Kompressor des Turboladers wird einerseits die Abgastemperatur vor dem SCR-Reaktor erhöht, so dass der SCR-Reaktor zuverlässig funktioniert. Andererseits bleibt die Turboladerdrehzahl trotz Rückführung von Luft relativ stabil, so dass der Gesamtprozess stabil bleibt und somit optimal abläuft.

Stromabwärts des Ladeluftkühlers kann eine Temperiervorrichtung und/oder ein Wasserabscheider angeordnet sein.

Eine Temperiervorrichtung kann als Kühler oder Heizvorrichtung ausgebildet sein, oder eine Kombination von Kühl- und Heizvorrichtung sein.

Eine derartige Vorrichtung erlaubt eine Temperierung der Luft im Umgehungspfad unabhängig von der Temperierung der Ladeluft und somit eine genaue Einstellung des Turboladerleistung.

Ein Wasserabscheider entfernt Feuchtigkeit aus der Ladeluft und die Luft gelangt möglichst trocken in den Verbrennungsraum. Somit entsteht weniger Korrosion.

Die Umgehungsleitung kann ein Umgehungsleitungseingangsventil umfassen, durch welches Umgehungsleitungseingangsventil die Umgehungsleitung ganz oder teilweise öffenbar oder schliessbar ist.

Somit lässt sich die Umgehungsleitung ausschliesslich verwenden, wenn sie tatsächlich gebraucht wird, also wenn die Abgastemperatur zu tief für ein optimales Funktionieren der selektiven katalytischen Reduktion ist.

Die Umgehungsleitung kann einen Wasserabscheider umfassen.

Somit gelangt auch nur möglichst trockene Luft zurück in die Turbine, sodass auch in der Turbine möglichst wenig Korrosion auftritt.

Die Umgehungsleitung kann eine Druckerhöhungsvorrichtung umfassen, die bevorzugt stromaufwärts der Temperiervorrichtung angeordnet ist.

Durch eine Druckerhöhungsvorrichtung in der Umgehungsleitung kann der Druck unabhängig vom Druck im Ladeluftreceiver angepasst werden. Des Weiteren kann der Druck auf den Druck oder leicht über den Druck in dem Turbinenpfad vor der Turbine optimiert werden, so dass ein zuverlässiges Einströmen in den Turbinenpfad aus der Umgehungsleitung möglich ist

Die Umgehungsleitung kann eine Umgehungsleitungsabschlussvorrichtung umfassen.

Die Umgehungsleitungsabschlussvorrichtung kann beispielsweise ein Ventil, eine Klappe, ein Rückschlagventil oder ein Kombination der genannten Elemente sein.

Die Umgehungsleitungsabschlussvorrichtung ermöglicht das Abtrennen der Umgehungsleitung vom Turbinenpfad und verhindert somit bei Nicht-Gebrauch ein Eintreten von Abgas in die Umgehungsleitung direkt aus dem Turbinenpfad.

Der Verbrennungsmotor kann eine Steuerungseinheit umfassen, durch die das Umgehungsleitungseingangsventil und bevorzugt das Umgehungsleitungsausgangsventil öffenbar und schliessbar sind, insbesondere teilweise öffenbar.

Weiterhin kann die Steuerungseinheit die Temperiervorrichtung steuern, sodass die Luft je nach Bedarf gekühlt oder geheizt werden kann. Weiterhin kann die Steuerungseinheit die Druckerhöhungsvorrichtung und den Wasserabscheider in der Umgehungsleitung steuern. Weiterhin kann auch ein Frischluftzufuhrventil von der Steuerungseinheit gesteuert werden.

Die Steuerungseinheit gemäss der vorliegenden Erfindung kann dabei entweder als reine Steuereinheit oder auch als Regelungseinheit ausgebildet sein. Des Weiteren ist es möglich, dass einzelne Vorrichtungen, wie beispielsweise die Ventile gesteuert werden und andere Vorrichtungen wie Temperiervorrichtung oder Druckerhöhungsvorrichtung einen Regelkreis aufweisen.

Zwischen Abgasauslass des Verbrennungsmotors und SCR Reaktor kann ein Harnstoffinjektor ausgebildet sein, wobei bevorzugt in einem Bereich zwischen Abgasauslass und Harnstoffinjektor, insbesondere bevorzugt kurz vor dem Harnstoffinjektor, ein Temperatursensor angeordnet ist.

Durch den Einsatz von Harnstoff wird die Reduktion von NOx optimiert.

In einem Bereich zwischen Abgasauslass des Motors und Turbine des Turboladers kann ein Temperatursensor zur Messung der Abgastemperatur angeordnet sein. Bevorzugt kann im SCR Reaktor oder am Eingang des SCR Reaktors ein Temperatursensor ausgebildet sein. Insbesondere kann der Temperatursensor direkt hinter einer letzten Katalysatorlage angeordnet sein. Die Anordnung eines Temperaturssensors kann alternativ oder zusätzlich in der Abgasleitung zwischen Abgasauslass des Verbrennungsmotors und selektivem katalytischem Reaktor liegen, insbesondere in einem Bereich zwischen Abgasauslass des Motors bis zu einer Harnstoffeindüsung vor dem SCR Reaktor, bevorzugt im Abgasrohr, insbesondere bevorzugt kurz vor der Harnstoffeindüsung.

Ein derartiger Temperatursensor ermöglicht die genaue Bestimmung der Temperatur des Abgases, insbesondere im oder sehr nah am katalytischen Reaktor und somit eine direkte Regelung der Abgastemperatur basierend auf den Messwerten. Zusätzlich kann die Abgastemperatur im Bereich der Harnstoffeindüsung bestimmt werden, so dass das Abgas in einem für die Harnstoffeindüsung optimalen Bereich gehalten werden kann.

Bevorzugt werden Daten des Temperatursensors oder der Temperatursensoren weiterhin an die Steuerungseinheit gesendet, wobei in der Steuerungseinheit basierend auf hinterlegten Sollwerten oder Sollwertbereichen Ventile, Druck und/oder Temperatur der Luft in der Umgehungsleitung regelbar ist.

Die Umgehungsleitung kann ein Frischluftzufuhrventil umfassen, durch welches Frischluft in die Umgehungsleitung einbringbar ist. Bevorzugt ist das Frischluftzufuhrventil stromaufwärts der Temperiervorrichtung angeordnet, insbesondere bevorzugt stromaufwärts der Druckerhöhungsvorrichtung angeordnet.

Durch die Verwendung eines zusätzlichen Frischluftzufuhrventils kann zusätzlich Frischluft in die Umgehungsleitung eingebracht werden, sodass die Luft aus dem Kompressor mit Frischluft gemischt wird oder ausschliesslich Frischluft durch die Umgehungsleitung in den Turbinenpfad eingeführt wird. Eine derartige Anordnung erhöht die Flexibilität und Steuerbarkeit des Verbrennungsmotors und senkt die Turboladereffizienz durch die zusätzliche Kühlung. Die Anordnung des Frischluftzufuhrventils stromaufwärts der Temperiervorrichtung ermöglich das Temperieren der Frischluft, die Anordnung weiterhin stromaufwärts der Druckerhöhungsvorrichtung ermöglicht eine Anpassung des Druckes auf den Druck im Turbinenpfad.

Somit wird die Abgastemperatur vollkommen unabhängig von Temperatur der Ladeluft und Druck der Ladeluft steuerbar.

Der Ladeluftreceiver kann ein Ablassventil umfassen.

Ein Ablassventil im Ladeluftreceiver führt zu der Möglichkeit den Druck im Ladenluftreceiver zu senken und somit zu einer weiteren separaten Steuerbarkeit einer Prozessvariablen für einen optimalen Verbrennungs- und Katalysatorprozess. Auch das Ablassventil kann durch die Steuerungseinheit steuerbar sein.

Die Druckerhöhungsvorrichtung in der Umgehungsleitung und/oder jegliche andere Druckerhöhungsvorrichtung kann bzw können einen Frequenzumrichter umfassen.

Durch die Verwendung eines Frequenzumrichters ist die Druckerhöhungsvorrichtung steuerbar, bevorzugt durch die Steuerungseinheit.

Zwischen Abgasreceiver und Turbinenpfad kann eine SCR-Umgehungsleitung ausgebildet sein, die ein SCR-Umgehungsventil umfasst, sodass der selektive katalytische Reaktor umgehbar ist.

Eine SCR-Umgehungsleitung ermöglicht das Weiterbetreiben des Motors auch bei einer Fehlfunktion des SCR Reaktors und dient somit der Betriebssicherheit des Motors. Weiterhin kann mit Hilfe der SCR-Umgehungsleitung der SCR ausgeschaltet werden, falls dieser nicht benötigt wird.

Zur Lösung der Aufgabe führt weiterhin ein Verfahren zum Optimieren der Abgasnachbehandlung, insbesondere des Abgases eines Verbrennungsmotors wie vorhergehend beschrieben, welches die folgenden Schritte umfasst:
- Messen einer Abgastemperatur, insbesondere einer SCR-Abgastemperatur im oder in der Nähe eines SCR Reaktors und/oder in einem Bereich zwischen Abgasauslass des Motors bis zu einer Harnstoffeindüsung vor dem SCR Reaktor, bevorzugt im Abgasrohr, insbesondere bevorzugt kurz vor der Harnstoffeindüsung durch einen Temperatursensor oder Bestimmen eines Lastbereiches des Verbrennungsmotors,
- Vergleich der gemessenen Abgastemperatur, insbesondere der SCR-Abgastemperatur oder Abgastemperaturen mit ein Sollbereich oder Sollwert oder Vergleich des Lastbereiches des Motors mit einem Tieflastbereich oder Tieflastwert, bevorzugt in einer Steuerungseinheit,
- bei Abweichung, insbesondere Unterschreitung, vom Sollbereich oder Sollwert oder Erreichen des Tieflastbereiches oder des Tieflastwertes, Öffnen eines Umgehungsleitungseingangsventils und bevorzugt eines Umgehungsleitungsausgangsventils, sodass Luft von einer Position stromabwärts eines Kompressors eines Turboladers und stromaufwärts eines Ladeluftkühlers zumindest teilweise durch eine Umgehungsleitung in einen Turbinenpfad zwischen SCR Reaktor und Turbine des Turboladers geleitet wird, wobei die Luft in der Umgehungsleitung derartig dosiert und bevorzugt temperiert wird, dass die SCR-Abgastemperatur sich in den Sollbereich oder auf den Sollwert einstellt.

Mit einem derartigen Verfahren wird ein zuverlässiges Funktionieren des SCR Reaktors sichergestellt und gleichzeitig der Betrieb des Verbrennungsmotors im optimalen Bereich gehalten.

Ein Tieflastbereich liegt beispielsweise bei 0 - 50% Motorlast, insbesondere 0-40% unter ISO-Normbedingungen, ein Tieflastwert bei 40% Motorlast. Der Solltemperaturbereich des Abgases im oder in der Nähe des SCR Reaktors liegt beispielsweise bei Temperaturen im Bereich von 250°C-500°C, die Solltemperatur des Abgases von der Harnstoffeindüsung beispielsweise in einem Bereich von mindestens 310°C.

Der Druck der Luft in der Umgehungsleitung kann durch eine Druckerhöhungsvorrichtung erhöht werden.

Somit kann der Druck in der Umgehungsleitung auf ein optimales Druckniveau für die Rückführung zur Turbine angepasst werden.

Frischluft kann durch ein Frischluftzufuhrventil in die Umgehungsleitung eingeführt werden und/oder Luft kann aus einem Ladeluftreceiver abgelassen werden, sodass der Ladeluftdruck regelbar ist.

Somit ist die Zufuhr von Frischluft in den Turbinenpfad unabhängig von Ladeluftdruck oder Temperatur und der Ladeluftdruck und die Ladelufttemperatur können für den Betrieb des Verbrennungsmotors optimiert werden.

Eine Steuerungseinheit kann ein Umgehungsleitungseingangsventil derartig steuern, dass durch die Luftmenge, die durch die Umgehungsleitung geführt wird, die Abgastemperatur erhöht wird.

Die Erfindung wird nachfolgend in Ausführungsbeispielen mit Hilfe von Figuren näher erläutert.
- Fig. 1: zeigt eine schematische Darstellung des erfindungsgemässen Verbrennungsmotors in einer ersten Ausführungsform,
- Fig. 2: eine schematische Darstellung eines erfindungsgemässen Verbrennungsmotors in einer zweiten Ausführungsform,
- Fig. 3: eine schematische Darstellung eines erfindungsgemässen Verbrennungsmotors in einer dritten Ausführungsform.

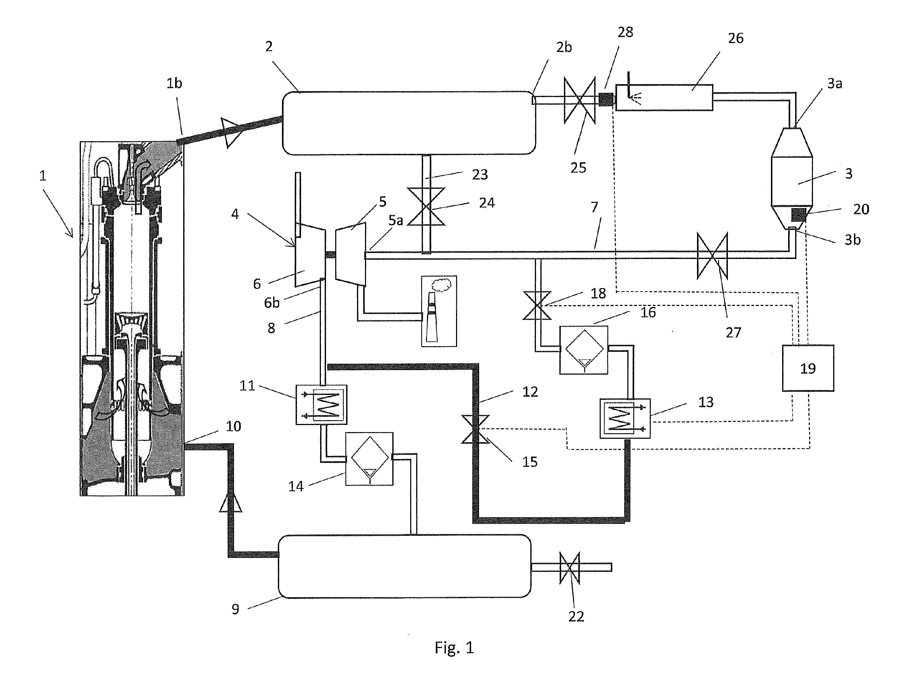

Fig. 1 zeigt eine schematische Darstellung des erfindungsgemässen Verbrennungsmotors 1, der einen Abgasreceiver 2 umfasst. Das Abgas wird vom Abgasauslass 1b des Verbrennungsmotors 1 in den Abgasreceiver 2 geleitet. Der Abgasreceiver 2 sammelt das Abgas aus den Zylindern des Verbrennungsmotors 1. Aus dem Auslass 2b des Abgasreceivers 2 wird das Abgas durch den SCR Reaktor 3 und dann auf eine Turbine 5 des Turboladers 4 geleitet. Der selektive katalytische Reaktor 3 weist einen Eingang 3a und einen Ausgang 3b auf. Der Ausgang 3b ist mit dem Turbineneingang 5a über Turbinenpfad 7 verbunden. Aus dem Ausgang 3b des SCR Reaktors 3 wird das Abgas durch Turbinenpfad 7 auf die Turbine 5 geleitet. Zwischen Abgasreceiver 2 und Eingang 3a des SCR Reaktors 3 ist zusätzlich ein Abgasreceiver-Ausgangsventil 25 und ein Harnstoff-Injektor 26 angeordnet. Durch das Abgasreceiver-Ausgangsventil 25 kann der selektive katalytische Reaktor 3 im Falle einer Störung oder eines Betriebes ohne SCR Reaktor 3 abgeschaltet werden.

Kurz vor dem Harnstoffinjektor 26 ist optional in allen Ausführungsbeispielen zusätzlich ein Temperatursensor 28 angeordnet, mit dem die Abgastemperatur direkt vor der Harnstoffinjektion messbar ist. Der Temperatursensor 28 ist mit der Steuerungseinheit 19 verbunden, so dass Temperaturabweichungen des Abgases erkannt werden können und Massnahmen zur Erhöhung der Temperatur getroffen werden können.

Stromabwärts des Ausgangs 3b des SCR Reaktors 3 ist weiterhin ein Turbinenpfad-Ventil 27 angeordnet, welches für den Fall des Nicht-Gebrauches oder eines Störungsfalles ebenfalls den Ausgang 3b des SCR Reaktors 3 abtrennbar macht. Die Turbine 5 des Turboladers 4 treibt einen Kompressor 6 an, durch den Frischluft verdichtet wird. Diese Frischluft wird aus dem Kompressorausgang 6b durch Ladeluftpfad 8 in den Ladeluftreceiver 9 geleitet. Der Ladeluftpfad 8 umfasst weiterhin einen Ladeluftkühler 11 sowie einen Wasserabscheider 14.

Stromaufwärts des Ladeluftkühlers 11, also zwischen Kompressor 6 und Ladeluftkühler 11 ist eine Umgehungsleitung 12 angeordnet, durch die Teile der verdichteten Luft aus dem Kompressor 6 umgeleitet werden können und zurück in den Turbinenpfad 6 geleitet werden können. Die Umgehungsleitung 12 umfasst ein Umgehungsleitungseingangsventil 15, eine Temperiervorrichtung 13, einen Wasserabscheider 16 sowie ein Umgehungsleitungsausgangsventil 18.

Eine derartige Umgehungsleitung 12 ermöglicht die Einführung von frischer, komprimierter und für den Zweck optimal temperierter Luft in den Turbinenpfad 7, insbesondere für den Fall, dass die Temperatur im SCR Reaktor 3 für den optimalen Betrieb des SCR Reaktors 3 zu niedrig ist. Die Temperatur des Abgases im SCR Reaktor 3 kann durch einen Temperatursensor 20, der im SCR Reaktor 3 oder am Eingang 3a des SCR Reaktors 3 angeordnet ist, bestimmt werden. Alternativ kann die Maschinenlast als Näherung für den Temperaturbereich herangezogen werden. Insbesondere bei einer Maschinenlast des Verbrennungsmotors 1 von weniger als 40% der Maximallast bei ISO Normbedingungen ist die Abgastemperatur erfahrungsgemäss zu niedrig und muss für einen ordnungsgemässen Betrieb des SCR Reaktors 3 erhöht werden.

Die Anordnung der Temperiervorrichtung 13 in der Umgehungsleitung 12 ermöglicht das selektive Temperieren der Luft, die zurück in den Turbinenpfad 7 gespeist wird. Dadurch kann die rückgeführte Luft optimal eingestellt werden, sodass die Temperatur im SCR Reaktor 3 zuverlässig ihren optimalen Bereich erreicht. Durch das Umgehungsleitungseingangsventil 15 und das Umgehungsleitungsausgangsventil 18 kann die Umgehungsleitung 12 abgetrennt werden, sodass der Verbrennungsmotor 1 bei ausreichender Temperatur im SCR Reaktor 3 ohne Umgehungsleitung 12 betrieben wird. Das Umgehungsleitungseingangsventil 15 und vorzugsweise auch das Umgehungsleitungsausgangsventil 18 werden durch Steuerungseinheit 19 gesteuert. Die Steuerungseinheit 19 steuert vorzugsweise zusätzlich die Temperiervorrichtung 13 und basiert entweder auf Informationen über den Lastzustand des Verbrennungsmotors 1 und/oder die Temperatur des Abgases im SCR Reaktor 3. Die Steuerungseinheit 19 kann daher Steuerungssignale vom Temperatursensor 20 empfangen.

Der Ladeluftpfad 8 umfasst einen Ladeluftkühler 11 und einen Wasserabscheider 14. Der Ladeluftkühler 11 temperiert die verdichtete Frischluft derartig, dass der Verbrennungsprozess im Verbrennungsmotor 1 für den gewünschten Zweck optimal ablaufen kann. Der Ladeluftreceiver 9 sammelt die Ladeluft, die von dem Ladeluftreceiver 9 zum Lufteinlass 10 des Verbrennungsmotors 1 geleitet wird. Der Ladeluftreceiver 9 umfasst weiterhin ein Ablassventil 22, durch welches der Druck im Ladeluftreceiver 9 angepasst werden kann. Durch Anpassung des Druckes im Ladeluftreceiver 9 wird die Effizienz des Verbrennungsprozesses im Verbrennungsmotor 1 gesenkt, wodurch die Abgastemperatur steigt. Dies ist durch Senken des Druckes im Ladeluftreceiver 9 sehr schnell möglich und erfordert keinen Eingriff in den Turbolader. Zwischen Abgasreceiver 2 und Turbinenpfad 7 ist ausserdem eine SCR-Umgehungsleitung 23 angeordnet, die ein SCR-Umgehungsventil 24 umfasst. Durch diese SCR-Umgehungsleitung 23 kann das Abgas aus dem Abgasreceiver 2 auf die Turbine 5 des Turboladers 4 geleitet werden, wenn der selektive katalytische Reaktor 3 nicht benötigt wird oder nicht betrieben werden kann.

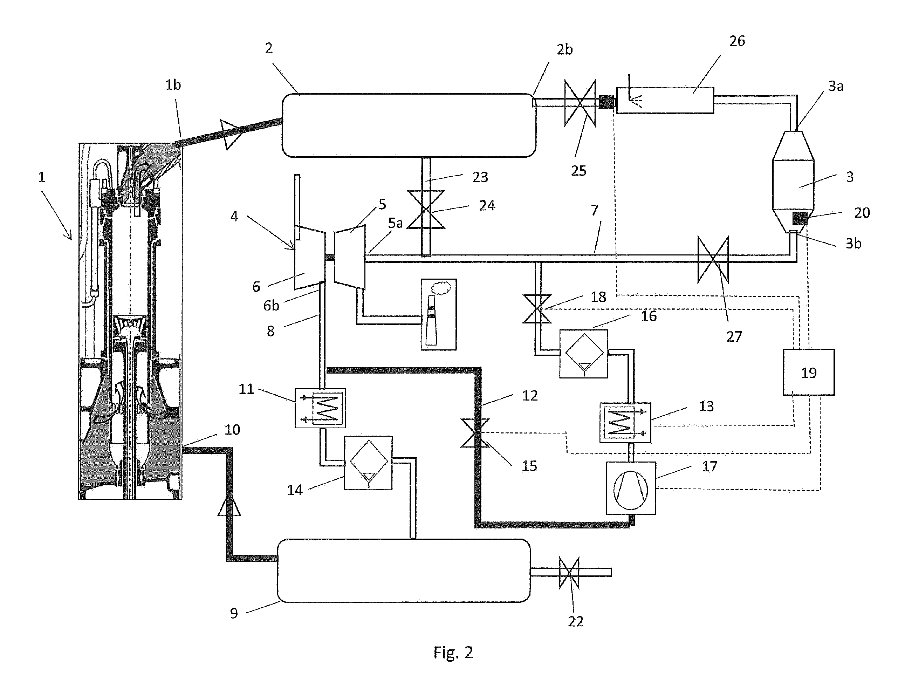

Die Ausführungsform, die in Figur 2 gezeigt ist, entspricht der gezeigten Ausführungsform in Figur 1 mit dem Unterschied, dass in der Umgehungsleitung 12 stromaufwärts der Temperiervorrichtung 13 eine Druckerhöhungsvorrichtung 17 angeordnet ist. Die Druckerhöhungsvorrichtung 17 ermöglicht zusätzlich zur Temperaturanpassung durch die Temperiervorrichtung 13 eine Anpassung des Druckes der Luft nach dem Kompressor 6 des Turboladers 4. Die Druckerhöhungsvorrichtung 17 wird bevorzugt ebenfalls durch Steuerungseinrichtung 19 gesteuert.

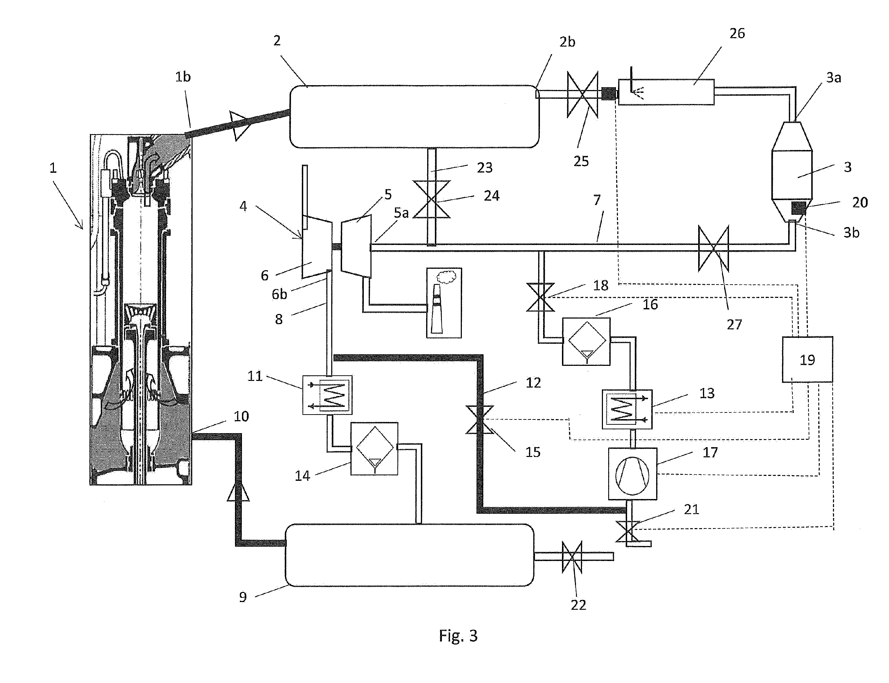

Die Ausführungsform gemäss Figur 3 entspricht der Ausführungsform aus Figur 2 mit dem Unterschied, dass in die Umgehungsleitung 12 stromaufwärts der Druckerhöhungsvorrichtung 17 Luft durch ein Frischluftzufuhrventil 21 eingebracht werden kann. Durch diese Frischluftzufuhr durch Frischluftzufuhrventil 21 kann heisse Luft aus dem Kompressor 6 mit kalter Luft aus Frischluftzufuhrventil 21 gemischt werden und somit auf eine leichte Art und Weise die durch Umgehungsleitung 12 rückgeführte Luft gekühlt auf die Turbine 5 geleitet werden. Somit wird die Turboladeeffizienz reduziert und damit auch die Effizienz des Verbrennungsprozesses gesenkt. Dadurch steigt die Abgastemperatur und der selektive katalytische Reaktor 3 funktioniert optimal. Bevorzugt wird auch das Frischluftzufuhrventil 21 durch Steuerungseinheit 19 gesteuert.

## Patentansprüche

1. Verbrennungsmotor (1), insbesondere 2-Takt Schiffsmotor, bevorzugt Kreuzkopfverbrennungsmotor, umfassend zumindest einen, bevorzugt eine Vielzahl von Zylindern, die mit einem Abgasreceiver (2) verbunden sind; einen SCR Reaktor (3), dessen Eingang (3a) mit einem Ausgang (2b) des Abgasreceivers (2) verbunden ist; einen Turbolader (4) mit einer Turbine (5) und einem Kompressor (6), wobei der Turbineneingang (5a) mit einem Ausgang (3b) des SCR Reaktors (3) über einen Turbinenpfad (7) verbunden ist, wobei die Turbine (5) des Turboladers (4) den Kompressor (6) antreibt und dessen Kompressorausgang (6b) über einen Ladeluftpfad (8) mit einem Ladeluftreceiver (9) verbunden ist, wobei der Ladeluftreceiver (9) mit einem Lufteinlass (10) der Zylinder des Verbrennungsmotors (1) verbunden ist und wobei der Ladeluftpfad (8) einen Ladeluftkühler (11) umfasst, **dadurch gekennzeichnet, dass** stromaufwärts des Ladeluftkühlers (11) eine Umgehungsleitung (12) angeordnet ist, die den Ladeluftpfad (8) mit dem Turbinenpfad (7) verbindet

2. Verbrennungsmotor (1) nach Anspruch 1, **dadurch gekennzeichnet, dass** stromabwärts des Ladeluftkühlers (11) ein Wasserabscheider (14) angeordnet ist.

3. Verbrennungsmotor (1) nach einem der vorhergehenden Ansprüche, **dadurch gekennzeichnet, dass** die Umgehungsleitung (12) ein Umgehungsleitungseingangsventil (15) umfasst, durch welches Umgehungsleitungseingangsventil (15) die Umgehungsleitung (12) ganz oder teilweise öffenbar und schliessbar ist.

4. Verbrennungsmotor (1) nach einem der vorhergehenden Ansprüche, **dadurch gekennzeichnet, dass** die Umgehungsleitung (12) eine Temperiervorrichtung (13) und/oder einen Wasserabscheider (16) umfasst.

5. Verbrennungsmotor (1) nach einem der vorhergehenden Ansprüche, **dadurch gekennzeichnet, dass** die Umgehungsleitung (12) eine Druckerhöhungsvorrichtung (17) umfasst, die bevorzugt stromaufwärts der Temperiervorrichtung (13) angeordnet ist.

6. Verbrennungsmotor (1) nach einem der vorhergehenden Ansprüche, **dadurch gekennzeichnet, dass** die Umgehungsleitung (12) eine Umgehungsleitungsabschlussvorrichtung(18) umfasst.

7. Verbrennungsmotor (1) nach einem der vorhergehenden Ansprüche, **dadurch gekennzeichnet, dass** der Verbrennungsmotor (1) eine Steuerungseinheit (19) umfasst, durch die das Umgehungsleitungseingangsventil (15) und bevorzugt das Umgehungsleitungsausgangsventil (18) öffenbar und schliessbar sind, insbesondere auch teilweise öffenbar sind.

8. Verbrennungsmotor (1) nach einem der vorhergehenden Ansprüche, **dadurch gekennzeichnet, dass** in einem Bereich zwischen Abgasauslass des Motors (1) und Turbine (5) des Turboladers (4) ein Temperatursensor (20) zur Messung der Abgastemperatur angeordnet ist, insbesondere ein Temperatursensor (20)im SCR Reaktor oder am Eingang des SCR Reaktors (3) ausgebildet ist.

9. Verbrennungsmotor (1) nach einem der vorhergehenden Ansprüche, **dadurch gekennzeichnet, dass** die Umgehungsleitung (12) ein Frischluftzufuhrventil (21) umfasst, durch welches Frischluft in die Umgehungsleitung (12) einbringbar ist, bevorzugt angeordnet stromaufwärts der Temperiervorrichtung (13), insbesondere bevorzugt angeordnet stromaufwärts der Druckerhöhungsvorrichtung (17).

10. Verbrennungsmotor (1) nach einem der vorhergehenden Ansprüche, **dadurch gekennzeichnet, dass** der Ladeluftreceiver (9) ein Ablassventil (22) umfasst.

11. Verbrennungsmotor (1) nach einem der vorhergehenden Ansprüche, **dadurch gekennzeichnet, dass** zwischen Abgasauslass des Verbrennungsmotors (1) und SCR Reaktor ein Harnstoffinjektor ausgebildet ist, wobei bevorzugt in einem Bereich zwischen Abgasauslass (1b) und Harnstoffinjektor, insbesondere bevorzugt kurz vor dem Harnstoffinjektor, ein Temperatursensor (28) angeordnet ist.

12. Verfahren zum Optimieren der Abgasnachbehandlung, insbesondere des Abgases eines Verbrennungsmotors (1) gemäss einem der Ansprüche 1 bis 11, umfassend die Schritte
- Messen einer Abgastemperatur, insbesondere einer SCR-Abgastemperatur im oder in der Nähe eines SCR Reaktors (3) und/oder in einem Bereich zwischen Abgasauslass des Motors bis zu einer Harnstoffeindüsung vor dem SCR Reaktor, bevorzugt im Abgasrohr, insbesondere bevorzugt kurz vor der Harnstoffeindüsung, durch einen oder mehrere Temperatursensoren (20) oder Bestimmen eines Lastbereiches des Verbrennungsmotors,
- Vergleich der gemessenen Abgastemperatur, insbesondere der SCR-Abgastemperatur oder Abgastemperaturen mit einem Sollbereich oder Sollwert oder Vergleich des Lastbereiches des Verbrennungsmotors mit einem Tieflastbereich oder Tieflastwert, bevorzugt in einer Steuerungseinheit (19),
- Bei Abweichung, insbesondere Unterschreitung, vom Sollbereich oder Sollwert oder Erreichen des Tieflastbereichs oder Tieflastwertes, Öffnen eines Umgehungsleitungseingangsventils (15) und bevorzugt des Umgehungsleitungsausgangsventils (18), so dass Luft von einer Position stromabwärts eines Kompressors (6) eines Turboladers (4) und stromaufwärts eines Ladeluftkühlers (11) zumindest teilweise durch eine Umgehungsleitung (12) in einen Turbinenpfad (7) zwischen selektivem katalytischen Reaktor (3) und Turbine (5) des Turboladers (4) geleitet wird, wobei die Luft in der Umgehungsleitung (12) derartig dosiert und bevorzugt temperiert wird, dass die SCR-Abgastemperatur sich in den Sollbereich oder auf den Sollwert einstellt.

13. Verfahren nach Anspruch 12, **dadurch gekennzeichnet, dass** ein Druck der Luft in der Umgehungsleitung (12) durch eine Druckerhöhungsvorrichtung (17) erhöht wird.

14. Verfahren nach einem der Ansprüche 12 oder 13, **dadurch gekennzeichnet, dass** Frischluft durch ein Frischluftzufuhrventil (21) in die Umgehungsleitung (12) eingeführt wird und/oder Luft aus einem Ladeluftreceiver (9) abgelassen wird, so dass der Ladeluftdruck regelbar ist.

15. Verfahren nach einem der Ansprüche 12 bis 14, **dadurch gekennzeichnet, dass** eine Steuerungseinheit (19) ein Umgehungsleitungseingangsventil (15) derartig steuert, dass durch die Luftmenge, die durch die Umgehungsleitung (12) geführt wird, die Abgastemperatur erhöht wird.
